# EUROPÄISCHE PATENTSCHRIFT

(11) **EP 0 341 537 B1**
(45) Veröffentlichungstag und Bekanntmachung des Hinweises auf die Patenterteilung: **03.11.1993**
(21) Anmeldenummer: 89107874.3
(22) Anmeldetag: 29.04.1989
(51) Int. Cl.: C08G 12/12, D04H 1/58

(54) **Verfahren zur Herstellung von wässrigen Vliesbindemitteln mit geringer Formaldehydemission beim Härten**
Process for the preparation of aqueous non-woven fabric binders emitting a small amount of formaldehyde when being cured
Procédé de préparation de liants aqueux pour nappe de fibres, durcissant en émettant une quantité réduite de formaldéhyde

(30) Priorität: 07.05.1988 DE 3815724
(43) Veröffentlichungstag der Anmeldung: 15.11.1989
(73) Patentinhaber: BASF Aktiengesellschaft, 67063 Ludwigshafen (DE)
(72) Erfinder: Kempter,Fritz Erdmann, Dr., D-6800 Mannheim 1 (DE); Matejcek,Franz, D-6715 Lambsheim (DE); Neubach, Werner, D-6700 Ludwigshafen (DE); Flory, Klaus, Dr., D-6909 Leimen (DE)

(56) Entgegenhaltungen:
- DD-A- 212 761
- DE-A- 2 210 283
- DE-A- 2 363 203
- DE-A- 2 453 250
- DE-A- 3 346 679

## Beschreibung

Die vorliegende Erfindung betrifft ein Verfahren zur Herstellung von wäßrigen Vliesbindemitteln mit verringerter Formaldehydemission beim Härten auf Basis von Kondensationsprodukten aus Harnstoff oder dessen Derivaten, Formaldehyd und Glyoxal mit einem Molverhältnis, bezogen auf das feste Bindemittel, von 1,5 bis 2,5 mol Formaldehyd und 0,1 bis 0,5 mol Glyoxal pro mol des insgesamt verwendeten Harnstoffes, das Vliesbindemittel sowie dessen Verwendung.

Bei diesem Verfahren entstehen mit H₂N-CO- bzw. R-NH-CO-Gruppen terminierte Harnstoff-Formaldehyd-Harze, wobei R den Teil eines Ringes darstellt, die 4,5-Dihydroxyethylenharnstoff-Gruppen I und gegebenenfalls Uron-Gruppen II enthalten.

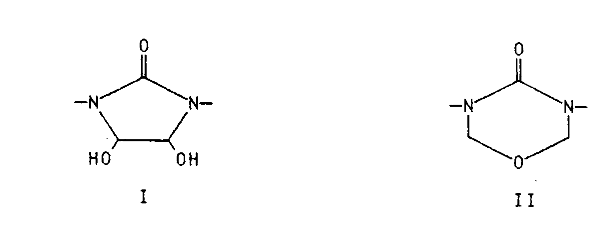

Verfahren zur Herstellung von 4,5-Dihydroxyethylenharnstoff-Gruppen und Uron-Gruppen enthaltenden Harnstoff-Formaldehyd-Harzen sind bekannt. Verwendet werden derartige Kondensate in der Textilindustrie zur Textilhochveredlung cellulosehaltiger Gewebe.

So beschreibt die JP 67/5114 ein Uron-Gruppen enthaltendes Textilhilfsmittel aus Harnstoff, Formaldehyd und Glyoxal mit einem Molverhältnis von 1:3,5 bis 5,5:0,05 bis 0,5. In der US-PS 4 198 462 sind Uron-Gruppen enthaltende Textilhilfsmittel bekanntgemacht mit einem Harnstoff-Formaldhehyd-Glyoxal-Molverhältnis von 1:2,8 bis 3,5:0,18 bis 0,55 und einem Gehalt an freiem Formaldehyd von < 2 Gew.%. Die DD-PS 212 761 beschreibt Textilhilfsmittel mit einem Harnstoff-Formaldehyd-Glyoxal-Molverhältnis von 1:1,5 bis 2,5:0,6 bis 0,8. In der DE-PS 2 520 005 sind uronhaltige Textilhilfsmittel mit einem Harnstoff-Glyoxal-Molverhältnis von 1:0,15 beschrieben. Die GB-PS 1 207 980 verwendet Reaktionsprodukte aus Harnstoff und Glyoxal, die mit Formaldehyd umgesetzt wurden, zur Imprägnierung von Polyamidfasern. In der ZA-PS 8 505 290 und DE-PS 2 152 705 werden Textilhilfsmittel formuliert als Kombinationsprodukte aus Glyoxal, Formaldehyd, Harnstoff und Ethylenglykol. Textilhilfsmittel mit niedrigem Gehalt an freiem Formaldehyd ( <2,5 %) aus Harnstoff, Formaldehyd und Glyoxal werden in der DE-PS 2 363 203 vorgeschlagen. Schließlich wird in der DE-PS 2 210 283 ein dreistufiges Verfahren zur Herstellung von Textilhochveredlungsmitteln als gegebenenfalls Uron-Gruppen enthaltendes Produkt aus Harnstoff, Formaldehyd, Glyoxal mit einem Gesamtmolverhältnis von 1:1,5 bis 2,5:0,3 bis 0,6 beschrieben, welches in der dritten Verfahrensstufe Harnstoff und Glyoxal (Molverhältnis 1:1) zusetzt und bei pH-Werten zwischen 5,0 und 7,0 kondensiert, mit dem Ziel, den im Überschuß vorhandenen Formaldehyd mit dem Reaktionsprodukt aus Harnstoff und Glyoxal zu dem Dimethylol-4,5-dihydroxyimidazolidinon-2 umzusetzen. Außerdem werden in der DE-OS 24 53 250 Pflegeleicht-Ausrüstungsmittel für Textilien aus Harnstoff, Formaldehyd, Glyoxal und primären Aminen formuliert.

Allen referierten Produkten und den Verfahren zu ihrer Herstellung ist es ein gemeinsames Merkmal, daß die Umsetzung mit Glyoxal bzw. die Kondensation der entsprechenden Umsetzungsprodukte bei pH-Werten zwischen 5,0 und 7,0 vorgenommen wird. Diesem Merkmal liegt die Erfahrung zugrunde, daß Produkte, die unter schärferen pH-Bedingungen umgesetzt bzw. kondensiert werden, gekennzeichnet sind durch Verluste bei der anwendungstechnischen Eigenschaft des textilen Gewebegriffs. Außerdem weisen die Produkte einen unerwünscht hohen Gehalt an freiem Formaldehyd auf. In den Fällen, wo auf die niedrigen Gehalte an freiem Formaldehyd hingewiesen wird, werden Werte von < 1,5 bis 2,0 Gew.% angegeben. Unabhängig vom Verhalten des eingebauten Formaldehyds der Kondensationsprodukte beim Härten selbst, muß ein erheblicher Anteil des emittierten Formaldehyds aus dem freien Formaldehyd stammen.

Der Erfindung lag daher die Aufgabe zugrunde, Vliesbindemittel zur Beschichtung von Mineral- und Textil-Vliesen bereitzustellen, die sowohl einen niedrigen Gehalt an freiem Formaldehyd als auch an thermisch abspaltbarem Formaldehyd aufweisen. Darüber hinaus sollen die Produkte bis auf möglichst niedrige Konzentrationen vorzugsweise unbegrenzt klar wasserverdünnbar sein und eine solche Lagerstabilität und pH-Wert-Stabilität aufweisen, daß die technische Verwertbarkeit gewährleistet ist.

Diese Aufgabe wurde durch ein Verfahren zur Herstellung von Vliesbindemitteln auf der Basis von 4,5-Dihydroxyethylenharnstoff-Gruppen und gegebenenfalls Uron-Gruppen enthaltenden Harnstoff-Formaldehyd-Harzen gelöst. Gegenstand der vorliegenden Erfindung ist ein Verfahren zur Herstellung von wäßrigen Vliesbindemitteln mit verringerter Formaldehydemission beim Härten auf Basis von Kondensationsprodukten aus Harnstoff oder dessen Derivaten, Formaldehyd und Glyoxal mit einem Molverhältnis, bezogen auf das feste Bindemittel, von 1,5 bis 2,5 mol Formaldehyd und 0,1 bis 0,5 mol Glyoxal pro mol des insgesamt verwendeten Harnstoffes, dadurch gekennzeichnet, daß man
A) Harnstoff und Formaldehyd in wäßriger Lösung mit einem Molverhältnis von 1:2,0 bis 10 bei pH-Werten von 1 bis 10 und Temperaturen von 20 bis 95°C kondensiert,
B) mit Glyoxal in einem Molverhältnis von Harnstoff zu Glyoxal von 1:0,1 bis 0,5 bei pH-Werten von 2,0 bis 6,8 und Temperaturen von 60 bis 100°C kondensiert und mit einer solchen Menge
C) Harnstoff und/oder 2-Oxo-hexahydro-1,3,5-triazin und/oder 2-Oxo-4,6dialkyl-hexahydro-1,3,5-triazin in einer Menge, bezogen auf das feste Bindemittel, von 2 bis 20 Gew.%, bezogen auf den unsubstituierten oder den zur Herstellung der Triazine verwendeten Harnstoff, bei pH-Werten von 5,0 bis 8,5 und Temperaturen von 20 bis 100°C weiter umsetzt, gegebenenfalls unter Mitverwendung von bis zu 70 Gew.% Glyoxal, bezogen auf die Gesamtmenge Glyoxal, daß sich das angegebene Gesamtmolverhältnis ergibt.

Zu den einzelnen Verfahrensstufen A), B) und C) ist folgendes auszuführen:

Für die Umsetzung der ersten Verfahrensstufe A) können Harnstoffe in fester Form oder als Lösung und Formaldehyd in Lösung oder in Form reiner Polymerer wie beispielsweise Paraformaldehyd, Trioxan oder Tetroxan sowie auch in Form reiner Acetate verwendet werden. Anstelle von Harnstoff können selbstverständlich auch dessen Derivate wie die Methylolierungsgemische von Harnstoff mit Formaldehyd, die neben freiem Formaldehyd unter anderem auch die höheren Methylolverbindungen des Harnstoffs, also Tri- und Tetramethylolharnstoff enthalten, als Ausgangsmaterialien verwenden. Bevorzugt wird Formol® 50 der BASF verwendet, das ein Vorkondensat aus 50 Gew.% Formaldehyd, 25 Gew.% Harnstoff und 25 Gew.% Wasser ist.

In der Verfahrensstufe A) wird Harnstoff mit Formaldehyd im Molverhältnis 1:2 bis 10, vorzugsweise 1:2,1 bis 2,5, bei pH-Werten von 1 bis 10 umgesetzt. Die gegebenenfalls beabsichtigte Bildung des Uron-Ringes kann bei pH-Werten von 1 bis 3 und 8,5 bis 10 durchgeführt werden, wenn entsprechende Überschußmengen an Formaldehyd eingesetzt werden. Dabei liegt das Molverhältnis von Harnstoff zu Formaldehyd bei 1:4 bis 10, vorzugsweise 1:4 bis 6. Durch nachträgliche Harnstoffzugabe wird das dem Gesamtmolverhältnis entsprechende Harnstoff/Formaldehyd-Verhältnis eingestellt. Im pH-Bereich von 1 bis 3 wird mit anorganischen und organischen Säuren wie Schwefelsäure, Ameisensäure und Phosphorsäure gearbeitet. Bevorzugt wird Schwefelsäure verwendet. Der pH-Bereich von 8,5 bis 10 wird mit anorganischen oder organischen Basen eingestellt wie Natronlauge, Kalkmilch oder Triethanolamin. Bevorzugt wird Triethanolamin verwendet. Die Reaktionstemperaturen für die Kondensation liegen bei 20 bis 95°C, vorzugsweise bei 60 bis 95°C. Im Rahmen des hier vorgestellten Verfahrens ist die Kondensation unter Bildung des Uron-Ringes eine bevorzugte Maßnahme. Der Grad der Uronisierung liegt bei 3 bis 30 Gew.%, bevorzugt 6 bis 25 Gew.%, bezogen auf die Gesamtmenge Harnstoff. Da die Uronbildung hohe Überschußmengen an Formaldehyd voraussetzt, muß im Anschluß daran mit weiterem Harnstoff in solchen Mengen umgesetzt werden, daß das Molverhältnis von Harnstoff und Formaldehyd den obengenannten Bereich von 1:2,1 bis 1:2,5 erreicht. Dies wird im allgemeinen bei pH-Werten von 4 bis 8,5 durchgeführt, wobei der Harnstoff methyloliert wird. Wird im alkalischen pH-Bereich uronisiert bzw. methyloliert, so sollte der pH-Wert während der Umsetzung ständig durch Zugabe von Lauge nachgestellt werden. Die Reaktionsdauer liegt in Abhängigkeit von Temperatur und pH-Wert zwischen 30 Minuten und 4 Stunden. Das Reaktionsende erkennt man im allgemeinen daran, daß die Kondensation an freiem Formaldehyd konstant wird. Die Bestimmung des Uronisierungsgrades wird in üblicher Weise über Ramanspektroskopie vorgenommen. Durch die Uronringbildung wird neben einer deutlichen Verminderung der Formaldehydemission auch eine Verbesserung der Stabilitätseigenschaften erreicht. Die in dieser Stufe erhaltenen Kondensationprodukte Können vor der weiteren Umsetzung gemäß Stufe B auch noch mit einem primären Alkylamin umgesetzt werden.

Die Kondensation der zweiten Verfahrensstufe B) wird unter Zugabe von Glyoxal durchgeführt. Dabei kann Glyoxal auf einmal und sofort oder stufenweise in mehreren Portionen zugesetzt werden oder der Zugabe ein gewisse Zeit zur Erreichung eines bestimmten Kondensationsgrades bei pH-Werten von 4,0 bis 6,0 vorausgehen. Die stufenweise Zugabe von Glyoxal bewirkt eine verbesserte Wasserlöslichkeit der erfindungsgemäßen Verfahrensprodukte. Der Kondensationsgrad kann dabei in einem weiten Bereich variiert werden. Er wird nur durch die Abnahme der Wasserlöslichkeit begrenzt. Die Ringbildung mit Glyoxal wird bei 60 bis 90°C und pH-Werten zwischen 5 und 6 durchgeführt. Danach wird bei pH-Werten von 2 bis 4, vorzugsweise 2,5 bis 3,5 und bei Temperaturen von 80 bis 100°C und Kondensationszeiten von 30 Minuten bis 3 Stunden weiterkondensiert.

Die im zweiten Teil dieser Verfahrensstufe B) durchgeführte Kondensation bei pH-Werten zwischen 2 und 4 unterscheidet sich von der entsprechenden Verfahrensstufe der DE-PS 2 210 283 durch den geänderten pH-Bereich, in dem diese Kondensation durchgeführt werden soll. Dort wird ein Bereich von pH 5 bis 7 genannt. Erst die Weiterkondensation des überwiegend gebildeten Dimethylol-4,5-dihydroxyethylenharnstoffs unter drastischen Bedingungen gewährleistet nach den noch zu schildernden Verfahrensmaßnahmen der dritten Stufe C) die gewünschten Stabilitätseigenschaften der erfindungsgemäßen Verfahrensprodukte.

Zur Verfolgung des Fortgangs dieser Kondensationsreaktion können die üblichen Methoden wie Viskositätsmessung eingesetzt werden. Besonders hilfreich ist die Verfolgung des Trübungspunktes der Reaktionslösung durch Zugabe einer 25 gew.%igen Bittersalzlösung. Mit fortschreitender Kondensation wird die beginnende Trübung bei immer niedrigeren Verhältnissen von Reaktionslösung zu Bittersalzlösung bestimmt. Im allgemeinen wird die Kondensation bei Erreichen eines Verhältnisses von 1:0,6 bis 1,6, bevorzugt 1:1,1 bis 1,3 abgebrochen (Beispiel 1 bis 3). Der Gehalt an freiem Formaldehyd nach diesem Verfahrensschritt liegt zwischen 1 und 5 Gew.%, bezogen auf das Festharz.

In Abhängigkeit von der verwendeten Menge Glyoxal entsprechen den Trübungspunkten recht unterschiedliche Verdünnungsgrenzen bei Verdünnung mit vollentsalztem Wasser. Im allgemeinen wird an diesem Verfahrenspunkt eine unbegrenzte Wasserverdünnbarkeit angestrebt. Als untere Grenze kann ein Bereich von 1:15 bis 30 gelten, vorausgesetzt, daß die Maßnahmen der folgenden Verfahrensstufe eine Verarbeitbarkeit des Endproduktes als beispielsweise 10 bis 20 gew.%ige Lösung zulassen.

Eine modifizierte Verfahrensweise im zweiten Teil der Verfahrensstufe B) kommt dann in Betracht, wenn die Vorkondensation des Harnstoffharzes der ersten Stufe zu höheren Kondensationsgraden weitergeführt wird. In diesem Fall werden die Umsetzungen der zweiten Verfahrensstufe auf den cyclisierenden Einbau des Glyoxals in das Vorkondensationsprodukt reduziert. Charakterisiert wird diese Variante durch die Zunahme der Wasserlöslichkeit und Abnahme der Viskosität dieser Kondensationsprodukte während der Umsetzung. Da bei dieser Verfahrensvariante die Weiterkondensation nach der Cyclisierung entfällt, kann diese Umsetzung im allgemeinen bei pH-Werten von 4 bis 6,8 durchgeführt werden. Wegen des Vorteils geringeren Salzballastes und kürzerer Reaktionszeiten sowie der Möglichkeit der Reduzierung der Glyoxalmenge ist diese Verfahrensvariante eine bevorzugte Ausführungsform innerhalb des erfindungsgemäßen Verfahrens (Beispiel 4 und 5).

Die Vorkondensate der Verfahrensstufe B) enthalten noch freies Formaldehyd im Bereich von 1,0 bis 5,0 Gew.%, vorzugsweise zwischen 1,5 und 4,0 Gew.% und im allgemeinen kein freies Glyoxal mehr. Auf eventuell noch vorhandene Restmengen wird in der Verfahrensstufe C) eingegangen.

In der dritten Verfahrensstufe C) wird dem Reaktionsgemisch Harnstoff und/oder 2-Oxo-hexahydro-1,3,5-triazin und/oder das Umsetzungsprodukt aus Dimethylolharnstoff und Ammoniak mit gegebenenfalls Harnstoff und/oder 2-Oxo-4,6-dialkyl-hexahydro-1,3,5-triazin in einer Menge, bezogen auf das feste Bindemittel, von 2 bis 20 Gew.%, bevorzugt 3 bis 15 Gew.%, besonders bevorzugt 4 bis 10 Gew.%, bezogen auf den unsubstituierten oder den zur Herstellung der Harnstoffderivate verwendeten Harnstoff, zugefügt. Gegebenenfalls können dem Reaktionsgemisch auch noch Ethylenharnstoff sowie Propylenharnstoff zugesetzt werden. In der dritten Verfahrensstufe wird bei Temperaturen von 20 bis 100, pH-Werten von 5,0 bis 8,5 und Reaktionszeiten von 1 bis 10 h umgesetzt. Im allgemeinen findet der Hauptteil der Reaktion im Rahmen der Abkühlungsphase des Verfahrensansatzes statt. Hierbei kann Glyoxal in einer Menge von 0 bis 70 Gew.%, bevorzugt 0 bis 30 Gew.%, bezogen auf die Gesamtmenge Glyoxal, mitverwendet werden. Dies ist aber nur angezeigt, wenn in der Verfahrensstufe B) ein Mindestverhältnis von Harnstoff zu Glyoxal von 1:0,15 bis 0,22 angewandt wurde. Erst bei diesen bzw. höheren Harnstoff-Glyoxal-Verhältnissen ist die nachfolgende Zugabe von zusätzlichen Mengen an Glyoxal im Rahmen der genannten Grenzen zu empfehlen. Die genaue Dosierung hängt von der Gesamtrezeptur ab. Ihre Grenzen findet diese Maßnahme z.B. in der Beeinflussung der Stabilität des pH-Wertes der erfindungsgemäßen Bindemittel bei pH-Werten im Bereich von 6,8 bis 7,3, ihr Vorteil ist eine besonders starke Formaldehyd-Emissionserniedrigung beim Härten.

In der Verfahrensstufe C) werden die angegebenen Komponenten in solchen Mengen zugefügt, daß sich ein Gesamtmolverhältnis von Harnstoff zu Formaldehyd zu Glyoxal von 1:1,5 bis 2,5:0,1 bis 0,5, vorzugsweise 1:1,5 bis 2,0:1,5 bis 0,4 ergibt. Bei diesen Verhältnissen sind die Harnstoff-Derivate derart zu berücksichtigen, daß nur der zu ihrer Herstellung verwendete Harnstoff mitgerechnet wird.

Die Erfindung beruht auf der überraschenden Feststellung, daß auf der Basis der Vorkondensate der Verfahrensstufe B), die noch freies Formaldehyd enthalten, mittels der dritten Verfahrensstufe C) lagerstabile Produkte gebildet werden. Dabei sind unter stabilen Produkte solche zu verstehen, die über einen Zeitraum von 6 Wochen bis 6 Monaten ihre Wasserverdünnbarkeit nur unwesentlich verändern und Ausfällungen nicht aufweisen. Diese Produkte mit sehr niedrigen Gehalten an freiem Formaldehyd von 0,05 bis 1 Gew.%, bevorzugt 0,1 bis 0,5 Gew.%, bezogen auf das Festharz und bei Verwendung von Harnstoff einem Gehalt an freiem Harnstoff der nach der Gleichgewichtseinstellung im allgemeinen bei <1 Gew.% liegt, weisen eine stark reduzierte Formaldehydemission beim Härten bei gleichzeitiger die technische Verwendung gewährleistender Lagerstabilität (Verdünnbarkeit) auf, wobei über weite Strecken der Lagerzeit keine oder nur nach einiger Zeit eine geringfügige, die Verwendung nicht einschränkende Trübung auftritt.

Die pH-Wert-Einstellung der erfindungsgemäßen Verfahrensprodukte erfolgt allgemein mit Basen wie Natronlauge, Kalkmilch und Aminen. Dabei ist die letztgenannte Möglichkeit der Verwendung von Alkanolaminen, 2-Oxo-5-alkyl-1,3,5-hexahydro-triazine bevorzugt, insbesondere die Verwendung von Triethanolamin, carbamatisiertem Triethanolamin bzw. 5-Hydroxyethyltriazin, sowie 2-Oxo-(4,6-dialkyl)-hexahydro-1,3,5-triazin und das Umsetzungsprodukt aus Dimethylolharnstoff und Ammoniak. Damit werden die Verfahrensprodukte im allgemeinen auf einen pH-Wert von 5,0 bis 8,5 eingestellt.

Eine Modifizierungsmöglichkeit der nach dem erfindungsgemäßen Verfahren hergestellten Bindemittel besteht in der Möglichkeit des Zusatzes von alkoholischen OH-Gruppen tragenden Verbindungen in Mengen von 1 bis 30 Gew.%, z.B. Methanol, Ethanol, Ethylenglykol, Diethylenglykol und Triethanolamin sowie die in den deutschen Anmeldungen P 37 07 689.2 und P 37 07 691.4 genannten Aceton-Formaldehyd-Kondensationsprodukte, die gegebenenfalls auch nachträglich zugesetzt werden können.

Die nach dem erfindungsgemäßen Verfahren hergestellten Vliesbindemittel weisen vorzugsweise einen Feststoffgehalt von 50 bis 65 Gew.% auf und sind, in Abhängigkeit von der verwendeten Glyoxalmenge, leicht gelb gefärbt. Der Gehalt an freiem Formaldehyd im Bereich der bevorzugten Einsatzstoffverhältnisse liegt bei 0,1 bis 0,6 Gew.% freiem Formaldehyd, bezogen auf das Festharz.

Die beim Härten emittierten Mengen an Formaldehyd, gemessen nach einem bei den Beispielen beschriebenen Verfahren, liegen bei 0,1 bis 1,0 Gew.%, bevorzugt 0,15 bis 0,5 Gew.%, bezogen auf das Festharz, in Abhängigkeit von der verwendeten Harnstoffmenge in der dritten Verfahrensstufe C) verglichen mit 10 bis 50 Gew.% Formaldehydemission von handelsüblichen Vliesbindemitteln auf der Basis von Harnstoff und Formaldehyd.

Die Bestimmung des bei der Härtung emittierten Formaldehyds erfolgt in Anlehnung an die der Verarbeitungspraxis vergleichbaren Gegebenheiten. Die Ergebnisse lassen aber einen direkten Vergleich mit der Praxis nicht zu, da beim jeweiligen Anwender recht große Schwankungen, z.B. bei den Härtungsbedingungen und bei der Katalysatorwahl, auftreten können. Die Werte sind aber mit denen handelsüblicher Produkte vergleichbar. Die Beschreibung der Apparatur und eine Arbeitsvorschrift zur Bestimmung des beim Härten von Vliesen emittierten Formaldehyds befindet sich am Ende der Beispiele.

Zur Härtung der erfindungsgemäßen Verfahrensprodukte kommen anorganische und organische Säuren sowie latent saure Katalysatoren und Metallsalze in Betracht. Bevorzugt sind Phosphorsäure, p-Toluolsulfonsäure, Ammoniumchlorid, Ammoniumhydrogenphosphat und die Nitrate, Chloride und Acetate von Magnesium und Calcium. Zur Aushärtung der Bindemittel auf den Substanzen kommen die üblichen Härtungsbedingungen zur Anwendung, beispielsweise Temperaturen von 120 bis 250°C und Aushärtungszeiten von 1 bis 30 Minuten.

Die wäßrigen Harz-Lösungen sind als Überzugs-, Imprägnier- und Bindemittel für Faservliese und zur Naßverfestigung von Papieren geeignet. Die Faservliese können aus natürlichen oder synthetischen organischen Fasern, z.B. Polyamiden, Polyethylenglykolterephthalat, Polypropylen, Cellulose und/oder Viskose sowie mineralischen Fasern z.B. Gesteinswolle und insbesondere Glasfasern bestehen, wobei die Fasern die übliche Länge und Stärke aufweisen. Bei der Verfestigung der Vliese werden die erfindungsgemäß hergestellten Harzlösungen im allgemeinen in einer Konzentration von 10 bis 25 Gew.% eingesetzt und durch Imprägnieren der Vliese appliziert, wobei die Vliese z.B. durch ein Bad der Tränkharze geführt und dann in an sich üblicher Weise abgequetscht werden. Man kann die Vliese auch mit den Harzlösungen besprühen oder mit geschäumten Harzlösungen behandeln. Die imprägnierten Vliese werden dann gegebenenfalls nach dem Trocknen bei Temperaturen von 150 bis 250°C in einer Zeit von 2 bis 20 Minuten in der üblichen Weise getempert, wobei die Harze aushärten. Die erfindungsgemäßen Verfahrensprodukte weisen einen Gehalt an freiem Formaldehyd von 0,05 bis 0,6 Gew.%, bezogen auf das feste Bindemittel, auf. Die emittierten Mengen an bei der Härtung abgespaltenem Formaldehyd können im bevorzugten Verfahrensbereich hergestellt bis auf Werte von 0,1 bis 0,2 Gew.%, bezogen auf das Festharz, betragen.

Die mit dem erfindungsgemäßen Bindemittel beschichteten Vliese erreichen in ihren übrigen technologischen Eigenschaften das geforderte Eigenschaftsniveau. Die Lagerstabilität kann in Abhängigkeit der Verhältnisse der Einsatzstoffe zueinander wunschgemäß beeinflußt werden. Sie liegt bei 6 Wochen bis zu 1/2 Jahr. Die Stabilität der mit einem der genannten sauren Katalysatoren versetzten, verdünnten Lösungen (Flotte) des erfindungsgemäß hergestellten Vliesbindemittels, ist gegenüber der bisher üblichen Flotten, die beispielsweise gemäß dem Stand der Technik hergestellte methylolierte Harnstoffe enthalten, um den Faktor 2 bis 4 erhöht (bis 24 Stunden statt bisher 6 Stunden), in Sonderfällen noch deutlich höher.

### Beispiel 1

Zu 888,0 g Formol® 50 (ein Vorkondensat der BASF, bestehend aus 50 Gew.% Formaldehyd, 25 Gew.% Harnstoff und 25 Gew.% Wasser) wurden 1,85 g 35 gew.%iger Schwefelsäure bei 75°C zugegeben und 30 Minuten bei 90°C gehalten. Eine Probe wies dann einen Gehalt von 14 Gew.% an uronisiertem Harnstoff auf. Der pH-Wert wurde mit Kalkmilch auf 7,4 eingestellt, danach wurden 200 g Harnstoff zugegeben und bei einem pH-Wert von 8,0 20 Minuten bei 80°C methyloliert. Nach Zugabe von 72 g Diethylenglykol wurde der pH-Wert mit 10 gew.%iger Schwefelsäure auf 5,0 eingestellt und ca. 1 Stunde bei 80°C kondensiert, bis eine Probe des Kondensates mit 25 gew.%iger Bittersalzlösung bei einer Verdünnung von 1:1,7 eine Trübung erkennen ließ. Anschließend wurden 405 g 40 gew.%ige Glyoxallösung zudosiert und bei pH 5,6 ca. 30 Minuten zur Reaktion gebracht. Die Einstellung des endgültigen Kondensationsgrades erfolgte nach Zugabe von 75 gew.%iger Schwefelsäure (pH-Wert 2,8) und einer Reaktion der Lösung bei einer Temperatur von 96°C so lange bis eine mit 25 gew.%iger Bittersalzlösung versetzte Probe bei einem Mischungsverhältnis von 1:1,1 eine beginnende Trübung aufwies. Der Gehalt an freiem Glyoxal war 0 Gew.%. Danach wurde der pH-Wert mit Kalkmilch auf 5,6 und die Temperatur auf ca. 70°C eingestellt und 90,0 g Harnstoff zugegeben. Der pH-Wert wurde mit Kalkmilch mehrmals auf einen Wert von 7,1 nachgestellt und filtriert. 1595 g der Bindemittellösung mit einem Feststoffgehalt von 61 Gew.% wiesen nach 24 Stunden einen Gehalt an freiem Formaldehyd von 0,23 Gew.%, eine Viskosität von 155 mPas bei 30°C (gemessen mit dem ICI-Viskosimeter) und eine unbegrenzte Verdünnbarkeit mit vollentsalztem Wasser auf. Die gemessenen bei 170°C/7 Minuten emittierten Formaldehyd-Werte und die Lagerstabilitätswerte sind in der Tabelle niedergelegt.

### Beispiel 2

888,0 g Formol 50 wurden wie in Beispiel 1 uronisiert und wie angegeben mit 200,0 g Harnstoff methyloliert. Der pH-Wert wurde mit 10 gew.%iger Schwefelsäure auf einen Wert von 6,0 eingestellt, 72,0 g Ethylenglykol und 195,0 g 40 gew.%ige wäßrige Glyoxallösung zugesetzt und 30 Minuten bei einem pH-Wert von 5,6 und einer Temperatur von 80°C gerührt. Der Gehalt an freiem Glyoxal war 0 Gew.%. Danach wurden 130 g 40 gew.%ige wäßrige Glyoxallösung zugesetzt und wie oben angegeben weiter umgesetzt, nach 20 Minuten der pH-Wert mit 75 gew.%iger Schwefelsäure auf 3,1 eingestellt und die Reaktion der Lösung bei einer Temperatur von 96°C fortgesetzt, bis eine mit 25 gew.%iger Bittersalzlösung versetzte Probe bei einem Mischungsverhältnis von 1:1,25 eine beginnende Trübung aufwies. Der Gehalt an freiem Glyoxal war 0 Gew.%, der Gehalt an freiem Formaldehyd 1,75 Gew.%. Anschließend wurde der pH-Wert der Lösung mit Kalkmilch auf 5,6 eingestellt, 75,0 g Harnstoff und 80,0 g 40 gew.%ige wäßrige Glyoxallösung zugesetzt und 30 Minuten bei 80°C bei einem pH-Wert von 5,6 gerührt. Der pH-Wert wurde mehrmals mit Kalkmilch auf 7,2 nachgestellt, danach wurde die Lösung filtriert.

1597 g der Bindemittellösung mit einem Feststoffgehalt von 61,4 Gew.% wiesen nach 24 Stunden einen Gehalt von 0,48 Gew.%, nach 100 Stunden von 0,2 Gew.% an freiem Formaldehyd, eine Viskosität von 97 mPas bei 30°C und eine unbegrenzte Verdünnbarkeit mit Wasser auf.

### Beispiel 3

888,0 g Formol 50 wurden wie in Beispiel 1 uronisiert, danach wurden 35,0 g Ethanolamin zugetropft und 30 Minuten bei 50°C gerührt. Nachdem der pH-Wert mit Kalkmilch auf 8,0 eingestellt worden war, wurden 200 g Harnstoff zugesetzt und bei diesem pH-Wert 60 Minuten methyloliert. Nach Zugabe von 36 g Ethylenglykol und ca. 17 ml 10 gew.%iger Schwefelsäure sowie 162,0 g 40 gew.%iger wäßriger Glyoxallösung wurde 30 Minuten bei einem pH-Wert von 5,6 die Reaktion fortgeführt, anschließend mit 50 gew.%iger Schwefelsäure auf einen pH-Wert von 4,0 eingestellt und bei 80°C solange weiterkondensiert, bis eine mit 25 gew.%iger Bittersalzlösung versetzte Probe bei einem Mischungsverhältnis von 1:0,8 eine beginnende Trübung aufwies. Bei einem pH-Wert von 5,6 wurden sodann 108,0 g 40 gew.%ige Glyoxallösung und 75 g Harnstoff zugesetzt und 30 Minuten bei 65°C gerührt. Der pH-Wert wurde mehrmals mit Kalkmilch auf 7,2 nachgestellt und die Lösung filtriert. 1526,0 g der Bindemittellösung mit einem Feststoffgehalt von 63 Gew.% wiesen nach 24 Stunden einen Gehalt an freiem Formaldehyd von 0,25 Gew.% und eine Wasserverdünnbarkeit von 1:2 auf.

Nach 10 Wochen Lagerung des Produktes bei 20°C wurden bei unverändertem pH-Wert der Lösung eine Wasserverdünnbarkeit von 1:1,9 festgestellt (gemessen an einer praktisch unverändert klaren Bindemittellösung).

### Beispiel 4

888,0 g Formol 50 wurden wie in Beispiel 1 uronisiert und wie angegeben mit 200,0 g Harnstoff methyloliert. Nach Zugabe von 72,0 g Diethylenglykol wurde mit 10 gew.%iger Schwefelsäure der pH-Wert auf 5,0 eingestellt und bei 85 bis 90°C kondensiert bis eine mit 25 gew.%iger Bittersalzlösung versetzte Probe bei einem Mischungsverhältnis von 1:1,0 eine beginnende Trübung aufwies. Nach Zugabe von 270,0 g 40 gew.%iger wäßriger Glyoxallösung wurde bei dem sich einstellenden pH-Wert von 4,3 weiter umgesetzt, wobei bei steigender Wasserlöslichkeit und abnehmender Viskosität der Einbau von Glyoxal stattfindet. Nach etwa 75 Minuten konnte kein Gehalt an freiem Glyoxal mehr nachgewiesen werden. Eine mit 25 gew.%iger Bittersalzlösung versetzte Probe wies bei einem Mischungsverhältnis von 1:1,8 eine beginnende Trübung auf. Die Wasserlöslichkeit und Viskosität wurden durch weiteres Temperieren praktisch nicht mehr verändert.

Nun wurde der pH-Wert der Lösung mit Kalkmilch auf 5,6 und die Temperatur auf 65°C eingestellt, 65,5 g Harnstoff zugesetzt und 30 Minuten bei 60°C nachgerührt. Daraufhin wurde der pH-Wert mehrmals mit Kalkmilch auf 7,2 nachgestellt und die Lösung filtriert.

1400 g der Bindemittellösung mit einem Feststoffgehalt von 63 Gew.% wiesen nach 48 Stunden einen Gehalt von 0,20 Gew.% an freiem Formaldehyd, eine Viskosität von 145 mPas bei 30°C und eine unbegrenzte Verdünnbarkeit mit Wasser auf.

### Beispiel 5

Es wurde wie in Beispiel 4 vorgegangen. Nach der Glyoxal-Addition wurde der pH-Wert der Lösung mit Kalkmilch auf 5,6 eingestellt. Der Gehalt an freiem Formaldehyd betrug 2,15 Gew.%. Nach Zugabe von 88,5 g Harnstoff und 135 g 40 gew.%iger wäßriger Glyoxallösung wurde 30 Minuten bei 60°C nachgerührt. Daraufhin wurde der pH-Wert mit Triethanolamin auf 7,2 nachgestellt und die Lösung filtriert. Der Gehalt an freiem Glyoxal betrug 0 Gew.%. 1530 g der leicht gelbgefärbten Bindemittellösung mit einem Feststoffgehalt von 62,3 Gew.% wiesen nach 24 Stunden einen Gehalt von 0,2 Gew.% an freiem Formaldehyd, eine Viskosität von 120 mPas bei 30°C und eine unbegrenzte Verdünnbarkeit mit Wasser auf.

### Beispiel 6

Es wurde wie in Beispiel 5 vorgegangen. Statt Harnstoff wurden ausschließlich 140 g eines Umsetzungsproduktes aus 640 g Dimethylolharnstoff (Kaurit® S), 400,0 g Wasser und 458 g wäßrigem Ammoniak 25 gew.%ig mit einem Feststoffgehalt von 60,5 Gew.% zugesetzt und mit 12,5 g Triethanolamin und 40 g Wasser die ph-Werteinstellung vorgenommen. 1610 g der leicht gefärbten Bindemittellösung mit einem Feststoffgehalt von 59,5 Gew.% wiesen nach 24 Stunden einen Gehalt von 0,35 Gew.% an freiem Formaldehyd, eine Viskosität von 74 mPas bei 30°C und eine unbegrenzte Verdünnbarkeit mit Wasser auf.

**Tabelle**

| Beispiel | Formaldehyd-emission 170°C/7 min bez. auf Festharz | Lagerverhalten 20°C |
|---|---|---|
| Verfahrensbeispiel 1 | 0,33 Gew.%¹⁾ | n. 10 Wochen leichte Trübung²⁾ |
| Verfahrensbeispiel 2 | 0,48 Gew.%¹⁾ | n. 8 Wochen leichte Trübung²⁾ |
| Verfahrensbeispiel 3 | 0,25 Gew.%¹⁾ | n. 10 Wochen leichte Trübung²⁾ |
| Verfahrensbeispiel 4 | 0,37 Gew.%¹⁾ | n. 6 Wochen leichte Trübung²⁾ |
| Verfahrensbeispiel 5 | 0,21 Gew.%¹⁾ | n. 16 Wochen leichte Trübung²⁾ |
| Verfahrensbeispiel 6 | 0,23 Gew.%¹⁾ | - |
| Vergleichsbeispiel 1 DE-PS 2 210 283, Bsp. 1 | 1,07 Gew.% | n. 2 Tagen Trübung |
| Vergleichsbeispiel 2 DE-PS 2 210 283, Bsp. 2 | 0,96 Gew.% | n. 14 Tagen Trübung |
| Vergleichsbeispiel 3 DE-PS 2 210 283, Bsp. 3 | 1,16 Gew.% | n. 14 Tagen Trübung |
| Vergleichsbeispiel 4 DE-PS 2 210 283, Bsp. 4 | 2,60 Gew.% | n. 4 Tagen Trübung |
| Vergleichsbeispiel 5 DE-OS 2 453 250, Bsp. 8 | 2,00 Gew.% | - |
| Vergleichsbeispiel 6 Verfahrensbeispiel 1 ohne Harnstoff in der III. Stufe C) | 2,00 Gew.% | - |
| Glasvliesprobe Fa. Schuller, vorverfestigt, getempert 10'170°C | 1,00 Gew.%³⁾ | - |

| | | |
|---|---|---|
| ¹⁾ Mittelwert aus 3 Messungen | | |
| ²⁾ ohne Beeinträchtigung der Verarbeitbarkeit | | |
| ³⁾ bezogen auf Bindemittel | | |

Apparatur und Beschreibung des Vorgehens bei der Bestimmung des beim Härten emittierten Formaldehyds von Vliesbindemitteln (n. Melliand Textilberichte 66 (1985), 217-222, 285-295, 363-369)
Gerät (siehe Figur): Ummanteltes Rohr mit Schieber und Aufsatzkappe mit Kugelschliff, Höhe: 45 cm; Durchmesser: 5,5 cm
Thermometer, 100 bis 250°C, 4 Waschflaschen mit Glasfilterfritten, Thermostat mit externer V2A-Heizschlange (Wärmetauscher), Siliconöl AP 500 (Fa. Wacker), Wasserstrahlpumpe, 2 Trockengasuhren, Wringer, Analysenwaage, Meßkolben, Fortunapipetten, Nähfaden, Nähnadel.

Durchführung: Glasvliesproben Fa. Schuller, vorverfestigt mit 5 Gew.% Binder (Festharz) bezogen auf Vlies, getempert 10 Minuten bei 170°C wurden mit einer Flotte, die das Vliesbindemittel (20 gew.%ig) und 2 Gew.% Ammoniumchlorid, bezogen auf das Festharz, enthielt auf eine Flottenaufnahme von ca. 20 Gew.% (des Festharzes) abgequetscht, gewogen und sofort in dem ummantelten Rohr, das mit Öl auf ca. 170°C aufgeheizt wurde, bei 170°C 7,0 Minuten kondensiert. Um einen guten Wärmeübergang zu gewährleisten, wurde ein Heißluftstrom, der ebenfalls auf die gewünschte Härtungstemperatur vorerhitzt wurde, durch das Rohr geleitet. Die Vliesprobe hing an einem Faden. Nach der Kondensationszeit wurde die Probe nach Betätigung des Schiebers aus dem Rohr entnommen.

Vor und hinter dem Rohr waren zwei Gasuhren so geschaltet, daß ein Stickstoffstrom von ca. 0,5 m³/h (Gasuhr vor der Anlage) und 0,55 m³/h (Gasuhr hinter der Anlage) durchgeleitet wurde. Die 4 Waschflaschen waren mit H₂O zur Absorption des emittierten Formaldehyds etwa halb gefüllt. Die Bestimmung des mit dem Luftstrom abgeführten Formaldehyds erfolgte colorimetrisch in der Weise, daß die ersten 3 Waschflaschen zusammen analysiert wurden, die vierte Flasche getrennt zur Kontrolle der Vollständigkeit der Absorption. Die colorimetrische Bestimmung erfolgte nach einer Vorschrift aus Textilveredlung 8 (1973), 412-422.

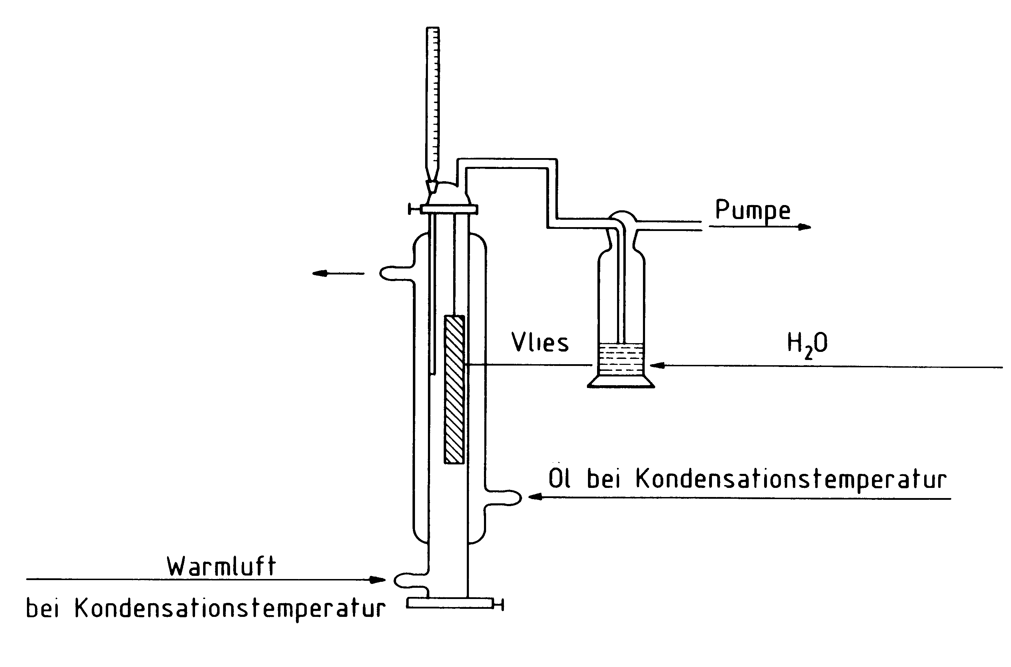

## Patentansprüche

1. Verfahren zur Herstellung von wäßrigen Vliesbindemitteln mit verringerter Formaldehydemission beim Härten auf Basis von Kondensationsprodukten aus Harnstoff, Harnstoff-Derivaten oder Gemische aus beiden, Formaldehyd und Glyoxal mit einem Molverhältnis, bezogen auf das feste Bindemittel, von 1,5 bis 2,5 mol Formaldehyd und 0,1 bis 0,5 mol Glyoxal pro mol des insgesamt verwendeten Harnstoffes, dadurch gekennzeichnet, daß man
A) Harnstoff und Formaldehyd in wäßriger Lösung mit einem Molverhältnis von 1:2,0 bis 10 bei pH-Werten von 1 bis 10 und Temperaturen von 20 bis 95°C kondensiert, wobei Harnstoff und Formaldehyd auch in Form ihrer Vorkondensatze eingesetzt werden Können, und das so erhaltenen Kondensationsprodukt
B) mit Glyoxal in einem Molverhältnis von Harnstoff : Glyoxal von 1:0,1 bis 0,5 bei pH-Werten von 2,0 bis 6,8 und Temperturen von 60 bis 100°C kondensiert und mit einer solchen Menge
C) Harnstoff und/oder 2-Oxo-hexahydro-1,3,5-triazin und/oder 2-Oxo-4,6-dialkyl-hexahydro-1,3,5-triazin in einer Menge, bezogen auf das feste Bindemittel, von 2 bis 20 Gew.%, bezogen auf den unsubstituierten oder den zur Herstellung der Triazine verwendeten Harnstoff, bei pH-Werten von 5,0 bis 8,5 und Temperaturen von 20 bis 100°C weiter umsetzt, gegebenenfalls unter Mitverwendung von bis zu 70 Gew.% Glyoxal, bezogen auf die Gesamtmenge Glyoxal, daß sich das angegebene Gesamtmolverhältnis ergibt.

2. Verfahren nach Anspruch 1, dadurch gekennzeichnet, daß man in der Stufe A) die gegebenenfalls Urongruppen enthaltenden Kondensate mit einem primären Alkylamin umgesetzt werden.

3. Verfahren nach den Ansprüchen 1 oder 2, dadurch gekennzeichnet, daß man zur Einstellung des pH-Wertes in der Stufe A) Triethanolamin verwendet.

4. Verfahren nach einem der Ansprüche 1 bis 3, dadurch gekennzeichnet, daß man das in der Stufe B) und C) verwendete Glyoxal stufenweise zusetzt.

5. Verfahren nach einem der Ansprüche 1 bis 4, dadurch gekennzeichnet, daß man in der Stufe C) das Umsetzungsprodukt aus Dimethylolharnstoff und Ammoniak verwendet.

6. Verfahren nach einem der Ansprüche 1 bis 5, dadurch gekennzeichnet, daß man in der Stufe C) Harnstoff verwendet.

7. Verfahren nach einem der Ansprüche 1 bis 6, dadurch gekennzeichnet, daß man zur Einstellung des pH-Wertes nach der Stufe C) Triethanolamin und/oder Umsetzungsprodukte aus Triethanolamin und Harnstoff und/oder 2-Oxo-5-alkyl-hexahydro-1,3,5-triazin verwendet.

8. Wäßrige Vliesbindemittel, erhältlich nach einem Verfahren gemäß einem der Ansprüche 1 bis 7.

9. Verwendung der wäßrigen Vliesbindemittel gemäß Anspruch 8 als Bindemittel zur Beschichtung von Mineral- und Textilvliesen.

## Claims

1. A process for preparing an aqueous nonwoven binder of reduced formaldehyde emission on curing that is based on a condensation product of urea, a urea derivative, or a mixture thereof, formaldehyde and glyoxal in a molar ratio, based on the solid binder, of from 1.5 to 2.5 moles of formaldehyde and from 0.1 to 0.5 mole of glyoxal per mole of the total urea used, which comprises
A) condensing urea and formaldehyde, if desired in the form of their precondensate, in an aqueous solution in a molar ratio of 1:(2.0-10) at a pH of from 1 to 10 and at from 20 to 95°C,
B) condensing the resulting condensation product with glyoxal in a molar ratio of urea:glyoxal of 1:(0.1-0.5) at a pH of from 2.0 to 6.8 and at from 60 to 100°C and
C) further reacting with such an amount of urea, 2-oxo-hexahydro-1,3,5-triazine or a 2-oxo-4,6-dialkyl-hexahydro-1,3,5,-triazine in an amount, based on the solid binder, of from 2 to 20% by weight, based on the unsubstituted urea or the urea used for preparing the triazine, at a pH of from 5.0 to 8.5 and at from 20 to 100°C, and with up to 70% by weight of glyoxal, based on the total amount of glyoxal, as to produce the stated overall molar ratio.

2. A process as claimed in claim 1, wherein in stage A) the uronyl-free or -containing condensate is reacted with a primary alkylamine.

3. A process as claimed in claim 1 or 2, wherein triethanolamine is used to set the pH in stage A).

4. A process as claimed in any of claims 1 to 3, wherein the glyoxal used in stages B) and C) is added a little at a time.

5. A process as claimed in any of claims 1 to 4, wherein in stage C) the reaction product of dimethylol-urea and ammonia is used.

6. A process as claimed in any of claims 1 to 5, wherein in stage C) urea is used.

7. A process as claimed in any of claims 1 to 6, wherein the pH in the stage C) is set with triethanolamine, a reaction product of triethanolamine and urea or a 2-oxo-5-alkylhexahydro-1,3,5-triazine.

8. An aqueous nonwoven binder obtainable by a process as claimed in any of claims 1 to 7.

9. The use of an aqueous nonwonen binder as claimed in claim 8 as a binder for coating mineral and textile webs.

## Revendications

1. Procédé de préparation de liants pour voiles, nappes ou mats à émission de formaldéhyde réduite au cours du durcissement, à base de produits de condensation de l'urée, de dérivés de l'urée ou de mélanges de l'urée et de dérivés de l'urée, du formaldéhyde et du glyoxal, avec un rapport molaire, rapporté au liant solide, de 1,5 à 2,5 moles de formaldéhyde et de 0,1 à 0,5 mode de glyoxal par mode de l'urée utilisée au total, caractérisé en ce que
A) on condense l'urée et le formaldéhyde en solution aqueuse dans un rapport molaire de 1:2,0 à 10, à des valeurs de pH de 1 à 10 et à des températures de 20 à 95°C, où l'on peut aussi mettre l'urée et le formaldéhyde en oeuvre sous forme de leurs précondensats et on condense le produit de condensation ainsi obtenu
B) avec le glyoxal, dans un rapport molaire de l'urée au glyoxal de 1:0,1 à 0,5, à des valeurs de pH de 2,0 à 6,8 et à des températures de 60 à 100°C et on poursuit la réaction avec une proportion telle
C) d'urée et/ou de 2-oxo-hexahydro-1,3,5-triazine et/ou de 2-oxo-4,6-dialkyl-hexahydro-1,3,5-triazine en une quantité, rapportée au liant solide, de 2 à 20% en poids, par rapport à l'urée non substituée ou à l'urée utilisée pour la préparation des triazines, à des valeurs de pH de 5,0 à 8,5 et des températures de 20 à 100°C, en recourant éventuellement à l'utilisation conjointe de jusqu'à 70% en poids de glyoxal, par rapport à la proportion totale de glyoxal, que s'établisse le rapport molaire total précité.

2. Procédé suivant la revendication 1, caractérisé en ce que, au cours de l'étape A), on fait réagir les condensats contenant éventuellement des radicaux urone avec une alkylamine primaire.

3. Procédé suivant les revendications 1 ou 2, caractérisé en ce que l'on utilise de la triéthanolamine pour établir la valeur du pH au cours de l'étape A).

4. Procédé suivant l'une quelconque des revendications 1 à 3, caractérisé en ce que l'on ajoute graduellement le glyoxal utilisé au cours des étapes B) et C).

5. Procédé suivant l'une quelconque des revendications 1 à 4, caractérisé en ce que l'on utilise le produit de la réaction de la diméthylolurée et de l'ammoniac au cours de l'étape C).

6. Procédé suivant l'une quelconque des revendications 1 à 5, caractérisé en ce que l'on utilise de l'urée au cours de l'étape C).

7. Procédé suivant l'une quelconque des revendications 1 à 6, caractérisé en ce qu'en vue du réglage de la valeur du pH après l'étape C), on utilise de la triéthanolamine et/ou des produits de réaction de la triéthanolamine et de l'urée et/ou de la 2-oxo-5-alkyl-hexahydro-1,3,5-triazine.

8. Liants pour voiles, nappes ou mats aqueux, que l'on peut obtenir par mise en oeuvre d'un procédé suivant l'une quelconque des revendications 1 à 7.

9. Utilisation des liants pour voiles, nappes ou mats aqueux suivant la revendication 8, à titre de liants pour le revêtement de voiles ou mats minéraux et de voiles ou mats textiles non tissés.
